# EUROPEAN PATENT SPECIFICATION

(11) **EP 2 954 773 B1**
(45) Date of publication and mention of the grant of the patent: **26.06.2019**
(21) Application number: 13874707.6
(22) Date of filing: 15.10.2013
(51) Int. Cl.: A01G 31/02

(54) **HYDROPONICS APPARATUS AND HYDROPONICS METHOD**
HYDROKULTURVORRICHTUNG UND HYDROKULTURVERFAHREN
APPAREIL DE CULTURE HYDROPONIQUE ET PROCÉDÉ DE CULTURE HYDROPONIQUE

(30) Priority: 06.02.2013 JP 2013021261
(43) Date of publication of application: 16.12.2015
(73) Proprietor: Panasonic Intellectual Property Management Co., Ltd., Osaka-shi, Osaka 540-6207 (JP)
(72) Inventor: YANO, Hiroshi, Osaka-shi, Osaka 540-6207 (JP)
(74) Representative: Müller-Boré & Partner Patentanwälte PartG mbB
(86) International application number: PCT/JP2013/006127
(87) International publication number: WO 2014/122703

(56) References cited:
- EP-A1- 0 052 264
- WO-A1-2006/013853
- WO-A1-2015/037163
- WO-A1-2015/040767
- GB-A- 741 493
- JP-A- S62 269 632
- JP-A- 2005 198 537
- JP-A- 2007 195 514
- US-A- 4 976 064
- TSUTOMU UEWADA: 'Satsumaimo no Suiko Saibai ni Kansuru Kenkyu (2) Teishokugo 100 Nichikan no Kaikon Shuryo' JAPANESE JOURNAL OF CROP SCIENCE vol. 55, 1, April 1986, pages 122 - 123, XP008177560

## Description

The present invention relates to a hydroponics apparatus for, and a hydroponics method of, growing a plant body.

### [Background Art]

Among known hydroponics methods of growing root vegetables is what is described in PTL1 given below. PTL 1 describes that a root vegetable is grown with a tip end portion of a taproot soaked in a hydroponic nutrient solution, but with portions of the taproot other than the tip end portion not soaked in the hydroponic nutrient solution.

The hydroponics method described in PTL1, however, involves likelihood of feeding the taproot too much or too less.

The present invention has been made with the foregoing situation taken into consideration. An object of the present invention is to provide a hydroponics apparatus and a hydroponics method which are capable of supplying an appropriate amount of liquid to a plant body.

### [Citation List]

EP 0 052 264 A1 relates to a hydroponics unit for research, teaching, domestic gardening and the like. In the cover of a vessel holding a stationary body of nutrient solution and an air space above it communicating with the ambient atmosphere, there are provided aerating device adapted to suck nutrient solution from the body of the solution in the vessel and to spray it in atomized form into said air space and at the same time to agitate the solution.

US 4 976 964 A relates to a device for injecting aqueous nutrient solution for hydroponic culture constituted of substantially horizontal supply pipes located in the air space, held against the lateral walls of the tank, injecting the nutrient solution in the form of droplets through injection orifices on opposed, substantially horizontal trajectories, thus improving their gaseous transfer capacity and their penetration into the nutrient solution to accomplish a continual saturation of this nutrient solution with oxygen.

### [Patent Literature]

[PTL 1] Japanese Patent Application Publication No. 2005-91

### [Summary of Invention]

It is an object of the present invention to provide a hydroponics apparatus and a hydroponics method for growing a healthy plant.

This object is solved according to the invention by the features of the independent claims. Particular embodiments are subject of the dependent claims.

A hydroponics apparatus of the present invention is a hydroponics apparatus configured to grow a plant body having a taproot (a main root) and lateral roots (branch roots, secondary roots) according to claim 1.

According to an embodiment of the invention, the lateral root feeding portion feeds the lateral roots in a way that an amount of liquid supplied to the lateral roots by the lateral root feeding portion is larger than the amount of liquid supplied to the taproot by the taproot feeding portion.

According to an embodiment of the invention, the lateral root feeding portion includes a water tank which locates a surface of the liquid supplied to the lateral roots under a lower end of the taproot; and the lateral roots extending from the taproot are soaked in the water tank.

According to an embodiment of the invention, the liquid from the taproot feeding portion is supplied to only a desired part of the taproot.

According to an embodiment of the invention, the lateral root feeding portion includes a circulator configured to circulate the liquid in which the lateral roots are soaked.

According to an embodiment of the invention, the taproot feeding portion sprays mist with a mist particle diameter of 10 micrometers to 100 micrometers onto the taproot.

A hydroponics method of the present invention is a hydroponics method of growing a plant body having a taproot and lateral roots according to claim 7.

### [Brief Description of Drawings]

Fig. 1 is a cross-sectional view illustrating a configuration of a hydroponics apparatus shown as an embodiment of the present invention.
Fig. 2 is a cross-sectional view illustrating another configuration of the hydroponics apparatus shown as the embodiment of the present invention.
Fig. 3 is a cross-sectional view of the hydroponics apparatus shown as the embodiment of the present invention, taken along the A-A line of Fig. 2.

### [Description of Embodiments]

Referring to the drawings, descriptions will be provided for an embodiment of the present invention.

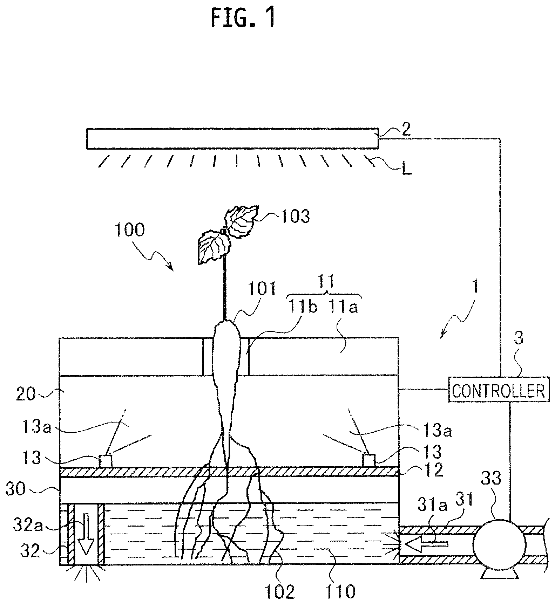

A hydroponics apparatus 1 to which the present invention is applied is configured as shown in Figs. 1 to 3, for example. The hydroponics apparatus 1 performs hydroponics in which a plant body 100 is grown by supplying a liquid to roots 101, 102 (underground portions) of the plant body 100 without using soil for the purpose of growing the plant body 100.

The following descriptions provided for the hydroponics apparatus 1 shown as the embodiment of the present invention is about a hydroponics apparatus configured to grow a root crop, for example. Nevertheless, the type of plant body 100 is arbitrary as long as the plant body 100 has the taproot 101 and the lateral roots 102. In addition, the liquid supplied to the plant body 100 in the embodiment, which will be described, includes water, and a hydroponic nutrient solution which is obtained by adding nutritious substances to water.

The hydroponics apparatus 1 illustrated in Fig. 1 grows the plant body 100 having the taproot 101 and the lateral roots 102. The hydroponics apparatus 1 includes: a supporting portion 11 (11a, 11b), a taproot feeding portion (12, 13), a lateral root feeding portion (30, 31, 32, 33), and a controller 3 .

The supporting portion 11 supports the plant body 100. The supporting portion 11 includes a lid portion 11a and a penetrated portion 11b. The supporting portion 11 supports the taproot 101 of the plant body 100 from side portions. In the hydroponics apparatus 1 illustrated in Fig. 1, a column-shaped sponge having the penetrated portion 11b in a central positon of the lid portion 11a, for example, may be used as the supporting portion 11. Thereby, the supporting portion 11 supports the plant body 100 using frictional force between the sponge and the plant body 100.

It should be noted that it does not matter what the supporting portion 11 is made from, for example it does not matter that the supporting portion 11 is made from a string-like object for pulling the terrestrial part of the plant body 100, as long as the supporting portion 11 can support the plant body 100. Incidentally, the lid portion 11a may be provided with multiple penetrated portions 11b.

As for the plant body 100 supported by the supporting portion 11, the upper end of the taproot 101 is exposed from the lid portion 11a. The stalk and leaves 103 extend upward from the upper end of the taproot 101.

A light source 2 is provided above the hydroponics apparatus 1. The light source 2 is made from multiple LEDs, for example. The light source 2 enables the stalk and leaves 103 to perform photosynthesis by receiving light L emitted from the light source 2.

The taproot feeding portion sprays the liquid (mist) 13a onto the taproot 101 through a space 20 inside a water tank 30. Thereby, the taproot feeding portion feeds the taproot 101. The taproot feeding portion includes an attachment portion 12 and sprayers 13.

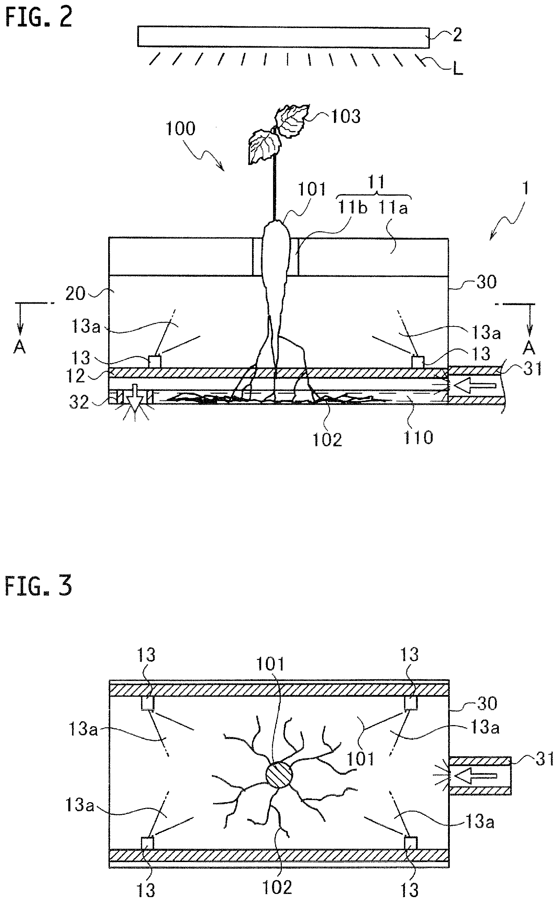

The attachment portion 12 is provided to the inner wall of the water tank 30. In the embodiment, as illustrated in Fig. 3, the attachment portion 12 is provided to the inner wall of the water tank 30 in a way that the attachment portion 12 is opposite the inner wall of the water tank 30. Fig. 3 illustrates the cross section of the hydroponics apparatus taken along the A-A line of Fig. 2. Incidentally, the example illustrated in Fig. 3 shows a configuration in which the liquid 13a is sprayed toward the center from the four corners of the water tank 30.

The attachment portion 12 may be provided at an arbitrary height position in the water tank 30 as long as the sprayers 13 can supply the liquid 13a to the taproot 101. One or multiple sprayers 13 are attached to the attachment portion 12. Incidentally, the height of the attachment portion 12 may be adjusted in the direction of height of the hydroponics apparatus 1. In the present embodiment, the surface of the liquid 110 is located under the lower end of the taproot 101.

Each sprayer 13 sprays the liquid 13a. The sprayer 13 is connected to a liquid supply pipe (not illustrated). The sprayer 13 sprays the liquid 13a (in mist), which is supplied through the liquid supply pipe, from its nozzle portion.

It is desirable that each sprayer 13 spray mist (13a) with a particle diameter of 10 micrometers to 100 micrometers onto the taproot 101. The reason for this is that the number of sprayers 13 intends to be reduced by supplying the liquid 13a evenly to the surface of the taproot 101.

As long as the diameter of the mist (13a) particles is not greater than 100 micrometers, the spray mode of the sprayers 13 may be arbitrary. Examples of the spray mode include an atomization type using a high-pressure gas, an ultrasonic mist type, and the like. It should be noted that the space 20 inside which the sprayers 13 spray the mist is close to hermetic for the purpose of enhancing the efficiency of mist feeding.

In addition, it is desirable that, as illustrated in Fig. 3, the sprayers 13 be capable of spraying the liquid 13a onto the taproot 101 in multiple directions. This makes it possible for the sprayers 13 to supply the liquid 13a to intended parts of the taproot 101.

Furthermore, the controller 3 adjusts at least one of a cycle and a length of time of spray of the liquid 13a by the sprayer 13. This makes it possible for the sprayer 13 to limit an amount of liquid 13a sprayed onto the taproot 101 to an amount needed for the taproot 101.

In other words, the feeding of the taproot 101 is reduced to a minimum requirement which has no influence on the growth of the plant body 100 from viewpoints of root hair growth inhibition and root rot prevention. The minimum requirement for the liquid 13a is included in predetermined growth conditions. The growth conditions include: the spray cycle in which each sprayer 13 sprays the mist; and the length of spray time for which the sprayer 13 sprays the mist in each spray cycle .

It should be noted that each sprayer 13 may limit an amount of nutrients supplied to the taproot 101 in addition to limiting the amount of spray of the liquid 13a.

For each sprayer 13, the controller 3 stores data on the cycle and the length of time of spray in a memory in advance. Thereby, the controller 3 judges whether the cycle of spray starts on time measured by a timer (not illustrated) . Depending on this judgement, the controller 3 makes each sprayer 13 spray the mist for the predetermined length of time of spray.

Thereby, the controller 3 is capable of making each of one or more desired sprayers 13 supply the liquid 13a to the taproot 101 in the predetermined cycle of spray, and for the predetermined length of time of spray.

The lateral root feeding portion feeds the lateral roots 102 with the lateral roots 102 soaked in a liquid 100. The lateral root feeding portion includes the water tank 30, a liquid introducing passage 31, a liquid drain passage 32 and a circulation pump 33.

A liquid 31a is introduced into the water tank 30 from the liquid introducing passage 31. The water tank 30 stores a liquid 110 in a way that an amount of liquid 110 stored in the water tank 30 is larger than an amount of liquid 110 in which the lateral roots 102 extending from the taproot 101 are soaked. Furthermore, the amount of liquid 110 in the water tank 30 is adjusted in a way that the surface of the liquid used to feed the lateral roots 102 is located under the lower end of the taproot 101.

This adjustment inhibits, for example, root hair from beginning to grow, and the taproot 101 from getting rotten, due to the liquid 110 which would otherwise come into touch with the taproot 101.

The circulation pump 33, as a circulation unit, configured to circulate the liquid 110 in which the lateral roots 102 is soaked is connected to the liquid introducing passage 31. The number of revolutions of the circulation pump 33 is adjusted in accordance with the control by the controller 3. The adjustment of the number of revolutions of the circulation pump 33 makes it possible to adjust the amount of liquid 31a introduced into the water tank 30 from the liquid introducing passage 31, and the amount of liquid 32a drained from the liquid drain passage 32.

Thereby, the amount of liquid 110 circulated in the water tank 30 is adjusted. The amount of circulated liquid 110 is adjusted in a way that the amount is larger than the amount of liquid 13a supplied to the taproot 101 by the taproot feeding portion. Thus, the hydroponics apparatus 1 feeds the lateral roots 102 in a way that the amount of liquid supplied to the lateral roots 102 is larger than the amount of liquid supplied to the taproot 101.

It should be noted that the configuration configured to circulate the liquid 110 in the water tank 30 is not limited to the circulation pump 33, and may be a unit configured to tip the water tank 30, or the like instead.

Furthermore, as illustrated in Fig. 2, the lateral root feeding portion may have the configuration in which the surface of the liquid in the water tank 30 is located right under the lower end of the taproot 101. In the case where the lateral root feeding portion has the configuration as illustrated in Fig. 2, the lateral root feeding portion may perform a type of hydroponics in which the lateral root feeding portion makes the liquid 110 flow in a thin stream (in small amounts) down along a flat surface of a gentle inclination. This type of hydroponics is termed as nutrient film technique (NFT). The configuration as illustrated in Fig. 2 makes it possible to reduce the size of the hydroponics apparatus 1.

The cross section of the hydroponics apparatus 1 taken along the A-A line of Fig. 2 is as illustrated in Fig. 3. A reduction in the depth of the liquid 110 stored in the water tank 30 makes the lateral roots 102 expand in the horizontal direction. This makes it possible for the plant body 100 to grow more healthfully than when as illustrated in Fig. 1, the lateral roots 102 is hung vertically. This, however, inhibits the growth of the taproot 101 in the vertical direction.

The controller 3 is connected to the sprayers 13 and the circulation pump 33 in the hydroponics apparatus 1. The controller 3 is further connected to the light source 2. The controller 3, for example, may be a control device which is included in the hydroponics apparatus 1. Otherwise, the controller 3 may be a personal computer, portable terminal or similar thing of the user. In addition, the controller 3 may be connected to multiple hydroponics apparatuses 1 and multiple light sources 2, instead of the single hydroponics apparatus 1 and the single light source 2.

The controller 3 adjusts at least one of the cycle and the length of time of spray by the taproot feeding portion (12, 13). The controller 3 limits the amount of liquid 13a sprayed onto the taproot 101 to the amount needed for the taproot 101. For the purpose of realizing this, the cycle and the length of time of spray by the taproot feeding portion 13 are set in advance . In addition, it is desirable that one or more sprayers 13 to be driven for the purpose of supplying the liquid 13a to only a desired part of the taproot 101 be switchingly selected by the controller 3 from the multiple sprayers 13.

Moreover, the controller 3 performs control so that the amount of liquid supplied to the lateral roots 102 by the lateral root feeding portion (30, 31, 32, 33) may become larger than the amount of liquid supplied to the taproot 101 by the taproot feeding portion (12, 13). To this end, the controller 3 controls the number of revolutions of the circulation pump 33, and thereby adjusts flow rates at which the liquid passes through the liquid introducing passage 31, the water tank 30 and the liquid drain passage 32, respectively.

In addition, the controller 3 may control a cycle and a length of time of light emission from the light source 2.

As described above, the hydroponics apparatus 1 is capable of realizing the hydroponics method in which: the feeding of the taproot 101 is achieved by spraying the liquid 13a onto the taproot 101; and the feeding of the lateral roots 102 is achieved by soaking the lateral roots 102 in the liquid 110. While performing the hydroponics method, the hydroponics apparatus 1 is capable of limiting the amount of liquid 13a sprayed onto the taproot 101 to the amount needed for the taproot 101. Thereby, the hydroponics apparatus 1 is capable of supplying the appropriate amounts of liquids (13a, 110) to the plant body 100.

Thus, the hydroponics apparatus 1 grows the plant body 100 which is one of the so-called root vegetables without soaking the taproot 101 of the plant body 100 in any liquid. Thereby, the hydroponics apparatus 1 is capable of preventing much root hair from beginning to grow from the taproot 101; and avoiding a situation in which harvesting parts such as the taproot 101, adventitious roots, rhizomes (root stalks), tubers or the like do not grow sufficiently.

In this respect, a root vegetable having the taproot 101 and the lateral roots 102 absorbs water and nutrients via the lateral roots 102 and root hair growing from the lateral roots 102. For this reason, it is desirable that the feeding of the lateral roots 102 be supported by both a sufficient amount of water and a sufficient amount of nutrients in order to optimally grow the plant body 100. To this end, the hydroponics apparatus 1 is configured such that the lateral roots 102 are soaked in the liquid 110 in order to supply the sufficient amount of water and the sufficient amount of nutrients to the lateral roots 102.

On the other hand, if the taproot 101 is fed in the same manner as is the lateral roots 102, there is likelihood that the taproot 101 gets rotten because the amount of water is too much for the taproot 101. For this reason, the hydroponics apparatus 1 limits the amount of liquid supplied to the taproot 101. In addition, the hydroponics apparatus 1 supplies the lateral roots 102 with the more liquid than supplied to the taproot 101. Thereby, the hydroponics apparatus 1 is capable of feeding the lateral roots sufficiently while feeding the taproot 101 within the necessary minimum range.

Furthermore, since the taproot 101 is not soaked in the liquid 110, the hydroponics apparatus 1 needs no configuration for raising and lowering the surface of the liquid in the water tank 30. This makes the configuration of the hydroponics apparatus 1 compact and economical. Nevertheless, the hydroponics apparatus 1 is capable of inhibiting root hair from beginning to grow from the taproot 101, and facilitating the growth of the harvesting parts.

It should be noted that the foregoing embodiment is one example of the present invention. For this reason, the present invention is not limited to the foregoing embodiment. Various modifications may be made to the present invention depending on the design and the like within the scope of the appended claims.

### [Industrial Applicability]

The present invention can limit the amount of liquid sprayed onto the taproot to the amount needed for the taproot while soaking the lateral roots soaked in the liquid. Thereby, the present invention can supply the appropriate amount of liquid to the plant body.

### [Reference Signs List]

- 1: hydroponics apparatus
- 3: controller
- 11: supporting portion
- 13: sprayer
- 30: water tank
- 31: liquid introducing passage
- 32: liquid drain passage
- 33: circulation pump
- 100: plant body
- 101: taproot
- 102: lateral roots

## Claims

1. A hydroponics apparatus (1) configured to grow a plant body (100) having a taproot (101) and lateral roots (102), comprising:
a supporting portion (11) configured to support the plant body (100);
a taproot feeding portion (12, 13) configured to feed the taproot (101) by spraying a liquid onto the taproot (101);
a lateral root feeding portion (30, 31, 32, 33) configured to feed the lateral roots (102) by soaking the lateral roots (102) in the liquid; and
a controller (3) configured to adjust at least one of a predetermined cycle and a predetermined length of time of spray by the taproot feeding portion (12, 13),
wherein the controller (3) stores data on the predetermined cycle and the predetermined length of time of spray in a memory, judges whether the predetermined cycle of spray starts on time measured by a timer, makes the taproot feeding portion (12, 13) spray a mist for the predetermined length of time of spray, and thereby, makes the taproot feeding portion (12, 13) supply the liquid (13a) to the taproot (101) in the predetermined cycle of spray for the predetermined length of time of spray;
wherein the controller makes the taproot feeding portion (12, 13) perform the spray of at least one of the predetermined cycle and the predetermined length of time so as to limit an amount of liquid sprayed onto the taproot (101).

2. The hydroponics apparatus (1) according to claim 1, wherein the lateral root feeding portion (30, 31, 32, 33) feeds the lateral roots (102) in a way that an amount of liquid supplied to the lateral roots (102) is larger than the amount of liquid supplied to the taproot (101) by the taproot feeding portion (12, 13).

3. The hydroponics apparatus (1) according to claim 1 or 2, wherein
the lateral root feeding portion (30, 31, 32, 33) includes a water tank (30) which locates a surface of the liquid supplied to the lateral roots (102) under a lower end of the taproot, and
the lateral roots (102) extending from the taproot (101) are soaked in the water tank (30).

4. The hydroponics apparatus (1) according to any one of claims 1 to 3, wherein the liquid from the taproot feeding portion (12, 13) is supplied to only a desired part of the taproot (101).

5. The hydroponics apparatus (1) according to any one of claims 1 to 4, wherein the lateral root feeding portion (30, 31, 32, 33) includes a circulator (33) configured to circulate the liquid in which the lateral roots are soaked.

6. The hydroponics apparatus (1) according to any one of claims 1 to 5, wherein the taproot feeding portion (12, 13) sprays mist with a particle diameter of 10 micrometers to 100 micrometers onto the taproot (101).

7. A hydroponics method of growing a plant body (100) having a taproot (101) and lateral roots (102), comprising:
feeding the taproot (101) by spraying a liquid onto the taproot (101);
feeding the lateral roots (102) by soaking the lateral roots (102) in the liquid, and
performing the spray of at least one of a predetermined cycle and a predetermined length of time so as to limit an amount of liquid sprayed onto the taproot (101) based on the control by a controller, wherein
the controller (3) stores data on the predetermined cycle and the predetermined length of time of spray in a memory, judges whether the predetermined cycle of spray starts on time measured by a timer, makes the taproot feeding portion (12, 13) spray a mist for the predetermined length of time of spray, and thereby, makes the taproot feeding portion (12, 13) supply the liquid (13a) to the taproot (101) in the predetermined cycle of spray for the predetermined length of time of spray.

## Patentansprüche

1. Hydroponik-Apparat (1), konfiguriert, um einen Pflanzenkörper (100) zu züchten, aufweisend eine Pfahlwurzel (101) und Nebenwurzeln (102), umfassend:
einen Stützabschnitt (11), konfiguriert, um den Pflanzenkörper (100) zu stützen;
einen Pfahlwurzel-Versorgungsabschnitt (12, 13), konfiguriert, um die Pfahlwurzel (101) zu versorgen, indem eine Flüssigkeit auf die Pfahlwurzel (101) gesprüht wird;
einen Nebenwurzel-Versorgungsabschnitt (30, 31, 32, 33), konfiguriert, um die Nebenwurzeln (102) zu versorgen, indem die Nebenwurzeln (102) in die Flüssigkeit eingetaucht werden; und
eine Steuerung bzw. Regelung (3), konfiguriert, um mindestens eines aus einem vorbestimmten Zyklus und einer vorbestimmten Zeitdauer des Sprühens durch den Pfahlwurzel-Versorgungsabschnitt (12, 13) anzupassen,
wobei die Steuerung bzw. Regelung (3) Daten über den vorbestimmten Zyklus und die vorbestimmte Zeitdauer des Sprühens in einem Speicher speichert, beurteilt, ob der vorbestimmte Zyklus des Sprühens zeitgerecht beginnt, gemessen durch einen Timer, den Pfahlwurzel-Versorgungsabschnitt (12, 13) dazu veranlasst, einen feinen Dunst über die vorbestimmte Zeitdauer des Sprühens zu sprühen und so den Pfahlwurzel-Versorgungsabschnitt (12, 13) dazu veranlasst, die Flüssigkeit der Pfahlwurzel (101) in dem vorbestimmten Zyklus des Sprühens über die vorbestimmte Zeitdauer des Sprühens zuzuführen;
wobei die Steuerung bzw. Regelung den Pfahlwurzel-Versorgungsabschnitt (12, 13) dazu veranlasst, das Sprühen aus mindestens einem aus dem vorbestimmten Zyklus und der vorbestimmten Zeitdauer des Sprühens durchzuführen, um eine Menge einer auf die Pfahlwurzel (101) gesprühten Flüssigkeit zu begrenzen.

2. Hydroponik-Apparat (1) nach Anspruch 1, wobei der Nebenwurzel-Versorgungsabschnitt (30, 31, 32, 33) die Nebenwurzeln (102) auf eine solche Art versorgt, dass eine Menge den Nebenwurzeln (102) zugeführter Flüssigkeit größer ist als die Menge der durch den Pfahlwurzel-Versorgungsabschnitt (12, 13) der Pfahlwurzel (101) zugeführten Flüssigkeit.

3. Hydroponik-Apparat (1) nach Anspruch 1 oder 2, wobei
der Nebenwurzel-Versorgungsabschnitt (30, 31, 32, 33) einen Wasserbehälter (30) beinhaltet, der eine Oberfläche der den Nebenwurzeln (102) zugeführten Flüssigkeit so anordnet, dass sie sich unter einem unteren Ende der Pfahlwurzel befindet, und die sich von der Pfahlwurzel (101) erstreckenden Nebenwurzeln (102) in den Wasserbehälter (30) eingetaucht werden.

4. Hydroponik-Apparat (1) nach einem der Ansprüche 1 bis 3, wobei die Flüssigkeit aus dem Pfahlwurzel-Versorgungsabschnitt (12, 13) nur einem gewünschten Teil der Pfahlwurzel (101) zugeführt wird.

5. Hydroponik-Apparat (1) nach einem der Ansprüche 1 bis 4, wobei der Nebenwurzel-Versorgungsabschnitt (30, 31, 32, 33) einen Zirkulator (33), konfiguriert zum Zirkulieren der Flüssigkeit, in der die Nebenwurzeln eingetaucht sind, beinhaltet.

6. Hydroponik-Apparat (1) nach einem der Ansprüche 1 bis 5, wobei der Pfahlwurzel-Versorgungsabschnitt (12, 13) feinen Dunst mit einem Partikeldurchmesser von 10 Mikrometern bis 100 Mikrometern auf die Pfahlwurzel (101) sprüht.

7. Hydroponik-Verfahren zum Züchten eines Pflanzenkörpers (100) aufweisend eine Pfahlwurzel (101) und Nebenwurzeln (102), umfassend:
Versorgen der Pfahlwurzel (101) durch Sprühen einer Flüssigkeit auf die Pfahlwurzel (101);
Versorgen der Nebenwurzeln (102) durch Eintauchen der Nebenwurzeln (102) in die Flüssigkeit, und
Durchführen des Sprühens aus mindestens einem aus dem vorbestimmten Zyklus und einer vorbestimmten Zeitdauer des Sprühens, um eine Menge einer auf die Pfahlwurzel (101) gesprühten Flüssigkeit zu begrenzen, auf der Grundlage der Steuerung bzw. Regelung durch eine Steuerung bzw. Regelung, wobei die Steuerung bzw. Regelung (3) Daten über den vorbestimmten Zyklus und die vorbestimmte Zeitdauer des Sprühens in einem Speicher speichert, beurteilt, ob der vorbestimmte Zyklus des Sprühens zeitgerecht beginnt, gemessen durch einen Timer, den Pfahlwurzel-Versorgungsabschnitt (12, 13) dazu veranlasst, einen feinen Dunst über die vorbestimmte Zeitdauer des Sprühens zu sprühen und so den Pfahlwurzel-Versorgungsabschnitt (12, 13) dazu veranlasst, die Flüssigkeit der Pfahlwurzel (101) in dem vorbestimmten Zyklus des Sprühens über die vorbestimmte Zeitdauer des Sprühens zuzuführen.

## Revendications

1. Appareil de culture hydroponique (1) configuré pour faire pousser un corps végétal (100) ayant une racine pivotante (101) et des racines latérales (102), comprenant :
une portion de support (11) configurée pour supporter le corps végétal (100) ;
une portion d'alimentation de racine pivotante (12, 13) configurée pour alimenter la racine pivotante (101) en pulvérisant un liquide sur la racine pivotante (101) ;
une portion d'alimentation de racines latérales (30, 31, 32, 33) configurée pour alimenter les racines latérales (102) en trempant les racines latérales (102) dans le liquide ; et
un contrôleur (3) configuré pour ajuster au moins un élément parmi un cycle prédéterminé et une durée prédéterminée de pulvérisation par la portion d'alimentation de racine pivotante (12, 13),
dans lequel le contrôleur (3) stocke des données sur le cycle prédéterminé et la durée prédéterminée de pulvérisation dans une mémoire, juge si le cycle prédéterminé de pulvérisation démarre à l'heure mesurée par une minuterie, fait pulvériser à la portion d'alimentation de racine pivotante (12, 13) un brouillard pour la durée prédéterminée de pulvérisation et fait de ce fait fournir à la portion d'alimentation de racine pivotante (12, 13) le liquide (13a) à la racine pivotante (101) dans le cycle prédéterminé de pulvérisation pour la durée prédéterminée de pulvérisation ;
dans lequel le contrôleur fait réaliser à la portion d'alimentation de racine pivotante (12, 13) la pulvérisation d'au moins un élément parmi le cycle prédéterminé et la durée prédéterminée de manière à limiter une quantité de liquide pulvérisée sur la racine pivotante (101).

2. Appareil de culture hydroponique (1) selon la revendication 1, dans lequel la portion d'alimentation de racines latérales (30, 31, 32, 33) alimente les racines latérales (102) de sorte qu'une quantité de liquide fournie aux racines latérales (102) est supérieure à la quantité de liquide fournie à la racine pivotante (101) par la portion d'alimentation de racine pivotante (12, 13).

3. Appareil de culture hydroponique (1) selon la revendication 1 ou 2, dans lequel la portion d'alimentation de racines latérales (30, 31, 32, 33) inclut un réservoir d'eau (30) qui situe une surface du liquide fourni aux racines latérales (102) sous une extrémité inférieure de la racine pivotante, et
les racines latérales (102) s'étendant depuis la racine pivotante (101) sont trempées dans le réservoir d'eau (30).

4. Appareil de culture hydroponique (1) selon l'une quelconque des revendications 1 à 3, dans lequel le liquide provenant de la portion d'alimentation de racine pivotante (12, 13) est fourni uniquement à une partie souhaitée de la racine pivotante (101).

5. Appareil de culture hydroponique (1) selon l'une quelconque des revendications 1 à 4, dans lequel la portion d'alimentation de racines latérales (30, 31, 32, 33) inclut un circulateur (33) configuré pour faire circuler le liquide dans lequel les racines latérales sont trempées.

6. Appareil de culture hydroponique (1) selon l'une quelconque des revendications 1 à 5, dans lequel la portion d'alimentation de racine pivotante (12, 13) pulvérise du brouillard avec un diamètre particulaire de 10 micromètres à 100 micromètres sur la racine pivotante (101).

7. Procédé de culture hydroponique consistant à faire pousser un corps végétal (100) ayant une racine pivotante (101) et des racines latérales (102), comprenant :
alimenter la racine pivotante (101) en pulvérisant un liquide sur la racine pivotante (101) ;
alimenter les racines latérales (102) en trempant les racines latérales (102) dans le liquide, et
réaliser la pulvérisation d'au moins un élément parmi un cycle prédéterminé et une durée prédéterminée de manière à limiter une quantité de liquide pulvérisée sur la racine pivotante (101) en fonction de la commande par un contrôleur, dans lequel
le contrôleur (3) stocke des données sur le cycle prédéterminé et la durée prédéterminée de pulvérisation dans une mémoire, juge si le cycle prédéterminé de pulvérisation démarre à l'heure mesurée par une minuterie, fait pulvériser à la portion d'alimentation de racine pivotante (12, 13) un brouillard pour la durée prédéterminée de pulvérisation et fait de ce fait fournir à la portion d'alimentation de racine pivotante (12, 13) le liquide (13a) à la racine pivotante (101) dans le cycle prédéterminé de pulvérisation pour la durée prédéterminée de pulvérisation.
